(19) Europäisches Patentamt
European Patent Office
Office européen des brevets

(11) **EP 4 761 231 A1**

(12) **EUROPEAN PATENT APPLICATION**

(43) Date of publication:
**17.06.2026 Bulletin 2026/25**

(21) Application number: **24307060.4**

(22) Date of filing: **10.12.2024**

(51) International Patent Classification (IPC):
**H04N 5/14** *(2006.01)*   **G06V 20/40** *(2022.01)*
**H04N 21/44** *(2011.01)*   **H04N 19/87** *(2014.01)*

(52) Cooperative Patent Classification (CPC):
**H04N 5/147; G06V 20/49; H04N 19/87;**
**H04N 21/44008**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **CAUVIN, Laurent
35250 CHEVAIGNE (FR)**
• **LOPEZ, Patrick
35450 LIVRE SUR CHANGEON (FR)**
• **PLISSONNEAU, Frederic
35235 THORIGNE-FOUILLARD (FR)**
• **TOUZE, David
35200 RENNES (FR)**

(74) Representative: **Interdigital
Immeuble ZEN 2
845 A, avenue des Champs Blancs
35510 Cesson-Sévigné (FR)**

(54) **VIDEO CUT DETECTION IMPROVEMENTS USING WINDOWING**

(57)     A method comprising obtaining (700) two consecutive pictures of a video sequence; computing (701) a first histogram of a first of the two consecutive pictures and a second histogram of a second of the two consecutive pictures; obtaining (702) a plurality of weighting curves, each weighting curve weighting a value of each bin of an histogram in function of a bin number; for each weighting curve of the plurality: applying (704) the weighting curve to the first and the second histograms to obtain weighted first and second histograms; summing (705) values of bins of the weighted first histogram to obtain a first sum and summing values of bins of the weighted second histogram to obtain a second sum; obtaining (706) a ratio of sums from the first sum and the second sum; and, calculating (707) an evidence value from the first sum, the second sum and the ratio; and, determining (708) that a scene cut occurs between the first and the second pictures based on at least one of the evidence values.

FIG. 7

**Description**

1. TECHNICAL FIELD

At least one of the present embodiments generally relates to the field of production of video and more particularly to a method, a device and a system for detecting cuts in a video.

2. BACKGROUND

A scene is defined as a sequence of successive video pictures captured with one continuous operation of one capture device. A video program is a succession of scenes. Some effects or processing can then be applied to the video program. It often happens that the characteristics or settings of these effects or processing depend on the content itself. For example, these settings can depend on an average luminance of the pictures, or on some characteristics of their histogram, an histogram being a representation of a statistical distribution of luminance values or of the color values of samples of a picture. As these characteristics are generally consistent during a whole scene, it is necessary to be able to detect scene cuts between two consecutive scenes to be able to correctly set the processing to be applied.

Many automatic scene detection methods are available in the literature. However, these methods may be subject to false detections, i.e. erroneous detections of a scene cut. Frequent false detection may be an issue, in particular since it implies an update of parameters of each process the parameters of which are adapted to the content and therefore increases the computation complexity and the energy consumption. In addition, frequent updates of parameters may increase a risk of flickering in the video.

It is desirable to overcome the above drawbacks.

It is particularly desirable to propose a method limiting false detections of scene cuts.

3. BRIEF SUMMARY

In a first aspect, one or more of the present embodiments provide a method comprising: obtaining two consecutive pictures of a video sequence;

computing a first histogram of a first picture of the two consecutive pictures and a second histogram of a second picture of the two consecutive pictures;
obtaining a plurality of weighting curves, each weighting curve weighting a value of each bin of an histogram in function of a bin number;
for each weighting curve of the plurality:

applying the weighting curve to the first and the second histograms to obtain weighted first and second histograms;
summing values of bins of the weighted first histogram to obtain a first sum and summing values of bins of the weighted second histogram to obtain a second sum;
obtaining a ratio of sums from the first sum and the second sum; and,
calculating an evidence value from the first sum, the second sum and the ratio; and,
determining that a scene cut occurs between the first and the second pictures based on at least one of the evidence values.

In an embodiment, a scene cut is detected responsive to at least one of the evidence values is larger than a first value.

In an embodiment, a scene cut is detected responsive to a sum of the evidence values is larger than a second value.

In an embodiment, the ratio of sums is obtained by dividing the first sum by the second sum responsive to the first sum is higher than the second sum or by dividing the second sum by the first sum otherwise.

In an embodiment, the evidence value is calculated as follows:

$$Evidence = ratio * |\,firstSum - secondSum\,|$$

where *evidence* is the evidence value, *ratio* is the ratio clipped in a range of allowed values, *firstSum* is the first sum and *secondSum* is the second sum.

In an embodiment, during the calculating of an evidence value, a trigger value is determined based on a comparison of the ratio with a third value, the evidence value being calculated using the trigger value.

In an embodiment, the evidence value is calculated as follows:

$$evidence = trigger * |firstSum - secondSum|$$

where *evidence* is the evidence value, *trigger* is the trigger value, *firstSum* is the first sum and *secondSum* is the second sum.

In an embodiment, the third value is a combination of a threshold value and a value representing a transition zone.

In a second aspect, one or more of the present embodiments provide a device comprising electronic circuitry configured for:

> obtaining two consecutive pictures of a video sequence;
> computing a first histogram of a first picture of the two consecutive pictures and a second histogram of a second picture of the two consecutive pictures;
> obtaining a plurality of weighting curves, each weighting curve weighting a value of each bin of an histogram in function of a bin number;
> for each weighting curve of the plurality:

>> applying the weighting curve to the first and the second histograms to obtain weighted first and second histograms;
>> summing values of bins of the weighted first histogram to obtain a first sum and summing values of bins of the weighted second histogram to obtain a second sum;
>> obtaining a ratio of sums from the first sum and the second sum; and,
>> calculating an evidence value from the first sum, the second sum and the ratio; and,
>> determining that a scene cut occurs between the first and the second pictures based on at least one of the evidence values.

In an embodiment, a scene cut is detected responsive to at least one of the evidence values is larger than a first value.

In an embodiment, a scene cut is detected responsive to a sum of the evidence values is larger than a second value.

In an embodiment, the ratio of sums is obtained by dividing the first sum by the second sum responsive to the first sum is higher than the second sum or by dividing the second sum by the first sum otherwise.

In an embodiment, the evidence value is calculated as follows:

$$Evidence = ratio * |firstSum - secondSum|$$

where *evidence* is the evidence value, *ratio* is the ratio clipped in a range of allowed values, *firstSum* is the first sum and *secondSum* is the second sum.

In an embodiment, during the calculating of an evidence value, a trigger value is determined based on a comparison of the ratio with a third value, the evidence value being calculated using the trigger value as follows:

$$evidence = trigger * |firstSum - secondSum|$$

where *evidence* is the evidence value, *trigger* is the trigger value, *firstSum* is the first sum and *secondSum* is the second sum.

In a third aspect, one or more of the present embodiments provide a non-transitory information storage medium storing program code instructions for implementing the method according to the first aspect.

4. BRIEF SUMMARY OF THE DRAWINGS

> FIGS. 1 to 4 provide examples of histograms of two consecutive pictures;
> FIG. 5 illustrates schematically a context in which embodiments are implemented;
> FIG. 6 illustrates an example of system in which embodiments of the present disclosure can be implemented;
> FIG. 7 illustrates schematically a method for identifying a scene cut in a video according to an embodiment;

FIG. 8 illustrates an example of histogram of a picture;
FIGS. 9, 10, 11 illustrate examples of weighted histograms;
FIGS. 12 and 13 illustrate examples of weighting curves; and,
FIGS. 14 to 28 illustrates various examples of applications of the method for identifying a scene cut in a video.

## 5. DETAILED DESCRIPTION

Histograms are often used to characterize a frame, for example the luminance histograms (or histograms of luminance values). To construct a histogram, a first step is to "bin" a range of value, that is, divide an entire range of values into a series of intervals, and then count how many values fall into each interval. The intervals (or bins) are considered here to be adjacent and of equal size. For example, if luminance values of an incoming frame is coded using "8" bits, we can construct its histogram using "4" bins: bin "0" counts the luminance values in the [0...63] range, bin "1" counts the luminance values in the [64... 127] range, bin"2" counts the luminance values in the [128... 191] range, and bin "3" counts the luminance values in the [192...255] range. We can also construct its histogram using "256" bins: each bin $i$ in the [0... 255] range counts the pixels in the frame having a luminance value equal to $i$.

Histogram difference-based methods are generally used for video cut detection. These methods are fast, accurate and very effective. A cut is declared to be detected when a difference, or a distance, between histograms of two consecutive pictures is higher than a given threshold. Following are examples of such histogram difference-based methods. In these examples, histograms $h1$ and $h2$ are normalized (i.e. all the bins are divided by the sum of the bins: as a consequence, the sum of all the bins of the resulting normalized histogram is equal to "1"), and bins at the same position in both histograms have the same size. In addition, $N$ is the number of bins in the histogram:

1. Sum of the absolute values of the difference of bins:

$$d = \sum_{i=1}^{N} |h1[i] - h2[i]|$$

2. Intersection of histograms:

$$d = 1 - \sum_{i=1}^{N} \min(h1[i], h2[i])$$

3. Correlation of histograms:

$$d = \sum_{i=1}^{N} (h1[i] - \frac{1}{N})(h2[i] - \frac{1}{N}) / [\sum_{i=1}^{N} \left(h1[i] - \frac{1}{N}\right)^2 \sum_{i=1}^{N} \left(h2[i] - \frac{1}{N}\right)^2]^{1/2}$$

Note that, as histograms are normalized, 1/N is the mean of the histogram.
4. Chi-2:

$$d = \sum_{i=1}^{N} \frac{(h1[i] - h2[i])^2}{h1[i] + h2[i]}$$

5. Bhattacharyya:

$$d = \left(1 - \sum_{i=1}^{N} h1[i]^{0.5} h2[i]^{0.5}\right)^{0.5}$$

When two consecutive frames are quite similar, the distance is close to zero, whatever the method. The distance must be compared against a threshold to detect if two consecutive frames are different.

It must be noted that the following distance:

$$d = \sum_{i=1}^{N} h1[i] - h2[i]$$

does not work. As both histograms are normalized, the result of the equation above is always "0" whatever the content of both histograms.

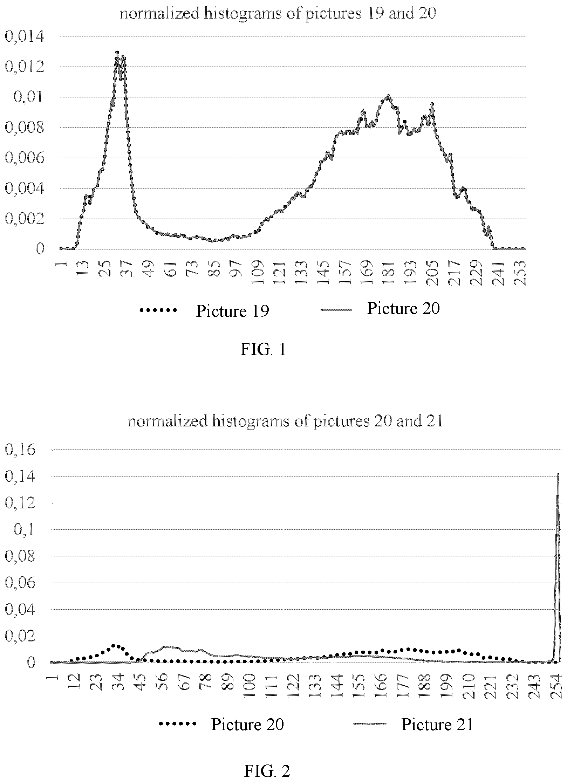

**FIG. 1** provides an example of histograms of two consecutive pictures numbered "19" and "20". The two histograms a nearly identical. Table TAB1 gives results of cut detection using the different distances. As can be seen, the value of each distance is very low (close to zero).

Table TAB1

| | |
|---|---|
| sum of absolute differences | 0.011306 |
| Intersection | 0.005653 |
| Correlation | 0.000159 |
| chi 2 | 0.000194 |
| Bhattacharyya | 0.009568 |

**FIG. 2** provides an example of histograms of two consecutive pictures numbered "20" and "21". The two histograms have strong differences with for instance a high peak of luminance values in picture "21" around "254". Table TAB2 gives results of cut detections using the different distances. As can be seen, the value of each distance is much higher than in table TAB1.

Table TAB2

| | |
|---|---|
| sum of absolute differences | 1.283675 |
| Intersection | 0.641837 |
| Correlation | 1.178864 |
| chi 2 | 0.597448 |
| Bhattacharyya | 0.633111 |

In table TAB3 minimum, maximum and average values of the distances computed using the "5" scene detection methods when applied on a video comprising "70" different scenes are aggregated. In this video, the content of the successive scenes differs considerably most of the time:

Table TAB3

| | Min value | Max value | Average value |
|---|---|---|---|
| sum of absolute differences | 0.382 | 1.722 | 0.934 |
| intersection | 0.191 | 0.861 | 0.467 |
| correlation | 0.095 | 1.626 | 0.833 |
| chi 2 | 0.160 | 1.271 | 0.571 |
| Bhattacharyya | 0.206 | 0.805 | 0.436 |

Table TAB4 shows the distances computed using the "5" scene detection methods when applied on a video comprising "5" scene cuts (cut "9", cut "10", cut "15", cut "19" and cut "32") difficult to detect since the contents of the scenes are very close:

Table TAB4

|  | cut 9 | cut 10 | cut 15 | cut 19 | cut 32 |
|---|---|---|---|---|---|
| sum of absolute differences | 0.395047 | 0.668901 | 0.721929 | 0.156466 | 0.375661 |
| intersection | 0.197524 | 0.33445 | 0.360964 | 0.078233 | 0.18783 |
| correlation | 0.294147 | 0.654908 | 0.618888 | 0.013388 | 0.172473 |
| chi 2 | 0.123276 | 0.263983 | 0.368478 | 0.035361 | 0.091886 |
| Bhattacharyya | 0.191818 | 0.264657 | 0.330439 | 0.103197 | 0.154695 |

The values for the much challenging cut (cut 19) (in table TAB4) are all lower than the ones of the "min value" column in the table TAB3 even if real scene cut exist. For the Bhattacharyya distance for example, the distance values in this set of cut samples goes from "0.10" to "0.33", and "3" distances are under the min value of the tableTAB3. Then choosing "0.1" as a threshold for the Bhattacharyya distance (and more generally a value close to the one of the column "cut 19" for each distance method) seems to be a correct value if we want to detect a maximum of cuts.

Nevertheless, there are some cases where all these distances fail, especially when one (or some) high level bin (i.e. bins associated to a high number of samples) shifts from one position to a close position in two consecutive frames. This is obviously not a scene cut (a human eye doesn't detect a scene cut, and generally doesn't even notice any change) even if all distances erroneously detect a scene cut. This is what is called a false detection or *false cut*.

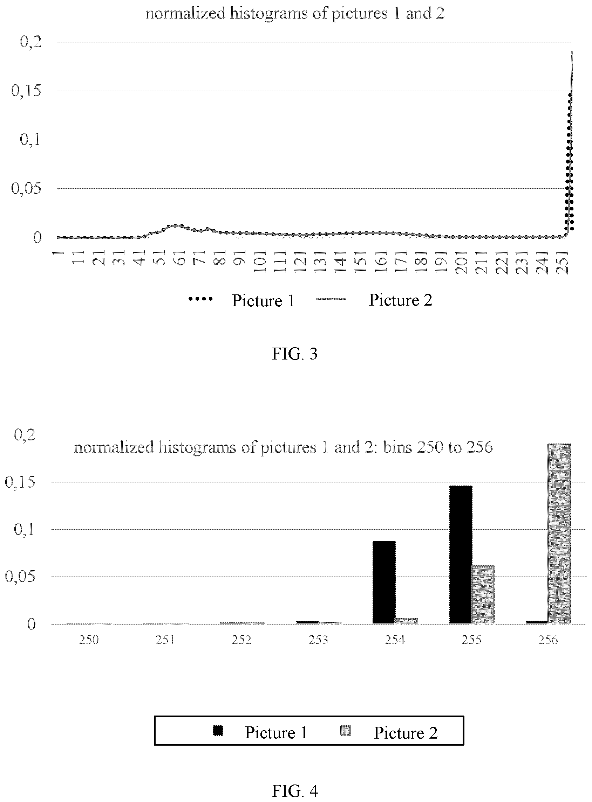

**FIG. 3** provides an example of two histograms, the histogram of a picture "1" showing a peak around the luminance values "254" and "255" while the histogram of picture "2" shows the same peak but around the luminance value "256".

**FIG. 4** provides the same example as Fig. 3 but with a zoom on values between "250" and "256".

We can see that both histograms are globally very close, except for bins "254", "255" and "256" where values have shifted. The consequence is that all the distances are not close to zero as reflected in table TAB5:

Table TAB5

| | |
|---|---|
| sum of absolute differences | 0.375011 |
| Intersection | 0.187505 |
| Correlation | 0.694425 |
| chi 2 | 0.286479 |
| Bhattacharyya | 0.324149 |

Moreover, the values of the distances in table TAB5 are in the same range as the value of the distances of the "true" scene cuts described above. For example, the Bhattacharyya distance is "0.32", which is higher than four of the five "true" scene cut distances shown in the example above for example for cut9, cut10, ..., cut32.

As can be seen, current scene cut detection methods generally detect a scene cut when the content of a bin of an histogram is just displaced to another bin or group of bins. This can happen when the luminance of a source of light with a given surface (as low as 3% of the complete picture, depending on the threshold chosen to trigger the scene cut detection) suddenly changes in the next picture.

The false cut detection described above happens because all the defined distances use comparisons of bins with identical index (index $i$ of a first histogram is compared to index i of a second histogram). The result of all comparisons is then summed.

Considering that when there is this kind of false cut detection: the bins which are not concerned by a bin shift remain quite constant from one frame to the following one (i.e., the histogram remains consistent excepted at the bin position(s) of the shift); the bin(s) which triggers the false cut detection varies a lot by definition.

These properties are used in European patent application EP23305120.0 to derive new solutions for identifying scene cuts.

A first solution consists in counting a number of absolute values of bin differences higher than a small threshold to detect scene cuts.

A second solution uses the following observations. Knowing that a sum of bin differences between two normalized histograms is zero, calculating the sum of the differences of bins of two normalized histograms higher than a small threshold also produces a result close to zero. In addition, applying a non-linear function such as the square root function to each bin before doing the sum of differences of bins when the absolute value of these differences is higher than a small threshold, and counting these differences, allows discriminating false scene from true scene cuts. Indeed, for false scene cuts, the number of these differences as well as their sum is close to zero. For true scene cuts, the number of these differences as well as their sum is not close to zero.

Both embodiments and their variants can be used alone or together with the distances mentioned above (i.e., sum of absolute differences, intersection, correlation, Chi 2 and/or Bhattacharyya). The combination with at least one of these distances may make the scene cut detection more robust.

These solutions (combined or not) are very effective when applied on natural images but are less efficient when applied on artificial images with a very small number of gray levels. Patterns are a good example of this kind of pictures. For example, a white image embedding a small black square following a black image embedding a small white square is not detected as a cut using this method. Indeed, the number of absolute values of differences of bin values higher than a small threshold is always lower than this threshold (excepted if this threshold is "1" or "0", which doesn't make sense).

Note that the histogram difference-based methods exposed above detect a cut in the case of artificial images described above.

Then, when the number of bins with a value different from zero is small as it is the case in some patterns, something is missing if we want to be able to avoid both the false cuts and the missed cuts described above. Using both methods together leads to a dead end as both methods give inconsistent results.

The present patent application proposes various embodiments to avoid false cut detection when a content of a predominant bin or of a group of bins goes to another close position. At the same time, these various embodiments offer solutions to avoid missed cut in sequences with a small number of non-empty bins when a predominant bin moves from a position to a distant one.

The proposed embodiments are based on histograms of two consecutive pictures.

A weighting is first applied on incoming histograms to obtain weighted histograms. For example, three weighting curves are used:

A first weighting curve, or low weighting curve, emphasizes bins of the left part of the histogram, i.e. the bins related to low levels of luminance in our case;
a second weighting curve, or mid weighting curve, emphasizes bins of the middle part of the histogram, i.e. the bins related to middle levels of luminance in our case;
a third weighting curve, or high weighting curve, emphasizes bins of the right part of the histogram, i.e. the bins related to high levels of luminance in our case.

Then each weighted histogram is integrated to obtain an integrated value, i.e. all the bin values of the weighted histogram are summed together. Each integrated value of a first picture of the two consecutive pictures is then compared to a corresponding integrated value of a second picture of the two consecutive pictures using a specific measurement detailed hereafter: for example, the integrated value of the weighted histogram obtained with the low weighting curve of the first picture is compared to the integrated value of the weighted histogram obtained with the low weighting curve of the second picture. A cut is detected if at least one integrated value obtained for the first picture is significantly different from the corresponding integrated value obtained for the second picture. Then:
Large bins (i.e. bins containing a lot of pixels) which move slightly in the histogram, and which generate false cuts with difference-based methods, while being ignored by the methods disclosed in the European patent application EP23305120.0, are also ignored by the proposed embodiments because the integration of the weighted histograms is not affected by small movements of bins in these weighted histograms;

Large bins which move a lot in the histogram, and which generate missed cuts by the methods disclosed in the European patent application EP23305120.0, while difference-based methods identify them as cuts, are also identified as cuts by the present embodiments because the integration of the weighted histograms is largely affected by large movements of large bins in those weighted histograms.

One can note that the methods and embodiments proposed in the present application can be combined with difference-based methods and with the methods disclosed in the European patent application EP23305120.0. In that case, a scene cut is detected only if at least two methods detect a scene cut.

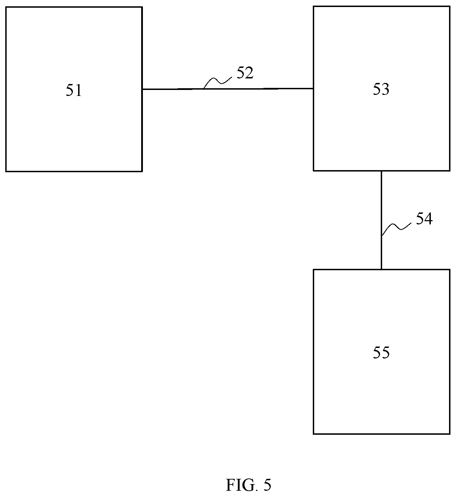

FIG. 5 illustrates schematically a context in which embodiments are implemented.

In FIG. 5, a system 51, that could be a camera, a storage device, a computer, a server or any device capable of delivering video data, transmits video data to a system 53 using a communication channel 52. The video data are either encoded and transmitted by the system 51 or received and/or stored by the system 51 and then transmitted. The communication channel 52 is a wired (for example Internet or Ethernet) or a wireless (for example WiFi, 3G, 4G or 5G) network link.

The system 53, that could be for example a set top box, receives and decodes the video stream to generate a sequence of decoded pictures. A post-processing is applied to the decoded pictures.

The obtained sequence of decoded pictures is then transmitted to a display system 55 using a communication channel 54, that could be a wired or wireless network. The display system 55 then displays said pictures.

In an embodiment, the system 53 is comprised in the display system 55. In that case, the system 53 and display system 55 are comprised in a TV, a computer, a tablet, a smartphone, a head-mounted display, etc.

In the example of Fig. 5, the post-processing is adapted to the content of the decoded video data. However, in order to limit the computations performed by the system 53, post-processing parameters are updated only after a scene cut. Post-processing parameters are supposed therefore adapted to all pictures of a scene. A post processing process is for example a filtering process for reducing a noise in a scene, a edge detection process comprised in an edge improvement process, a film grain process, etc.

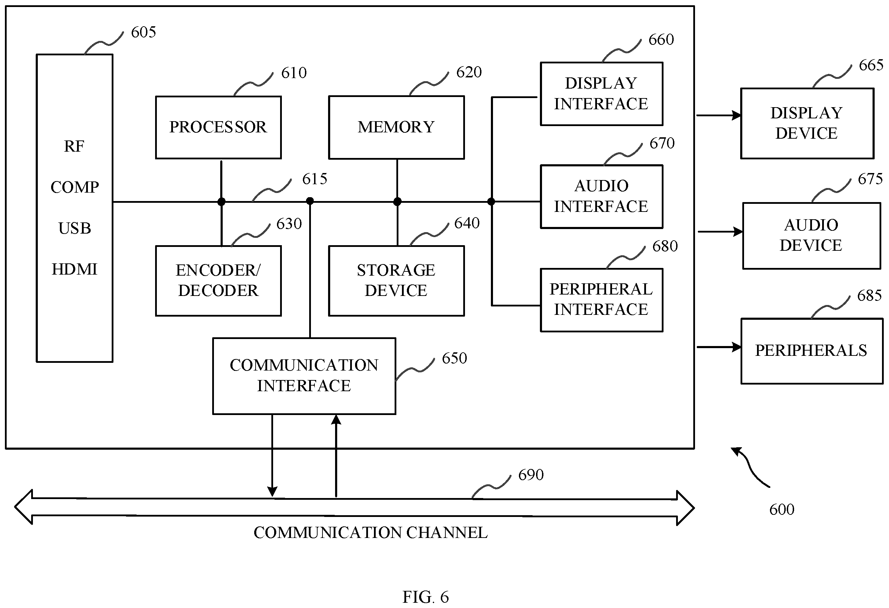

**FIG. 6** illustrates an example of system 600 implementing the system 51 or the system 53 in which embodiments of the present disclosure can be implemented.

The system 600 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 600, singly or in combination, may be implemented as an integrated circuit (IC), multiple ICs, and/or discrete components. For example, in one embodiment, the processing, encoding and/or decoding elements of system 600 are distributed across multiple ICs and/or discrete components. In some embodiments, the system 600 is communicatively coupled to and/or in communication with other systems or devices, via, for example, a communications bus or dedicated input/output ports.

One or more of the elements of system 600 may be provided within an integrated housing, with such elements being interconnected and able to transmit data therebetween using any suitable connection arrangement 615 generally known in the art, including, for example, an internal bus (e.g., I2C bus), wiring, and printed circuit boards.

The system 600 includes at least one processor 610 configured to execute instructions for implementing the embodiments described herein, including signal/data coding and processing. The processor 610 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 610 may include at least one central processing unit (CPU), embedded memory, input and output interfaces. All these types of processors are electronic circuitries.

The system 600 includes at least one memory 620, for example, a volatile memory device and/or a non-volatile memory device. The system 600 includes a storage device 640, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 640 may be or include, for example, an internal storage device, an attached storage device, and/or a network accessible storage device. Although shown separately, the memory 620 and the storage device 640 may be collocated, integrated together, or otherwise combined.

The system 600 includes an encoder/decoder module 630 configured to process raw video data/encoded video data and to provide encoded video data/decoded video data. The encoder/decoder module 630 may include one or more processors and/or memory (not shown). Although FIG. 6 depicts the encoder/decoder module 630 as a separate element of system 600, it will be understood that the processor 610 and the encoder/decoder module 630 may be collocated and/or integrated together as a combination of hardware and/or software, e.g., in an electronic package, circuitry or chip. The encoder/decoder module 630 may be or include one or more modules that may be included in one or more separate devices that perform encoding and/or decoding functions.

Instructions for execution by the processor 610 and/or the encoder/decoder module 630 may be stored in the storage device 640 and subsequently loaded into memory 620 for execution by the processor 610. In some embodiments, one or more of processor 610, memory 620, storage device 640, and encoder/decoder module 630 may store one or more items when performing the processes disclosed herein. Such items may include input raw video data, reconstructed video data, decoded video data or portions thereof, bitstreams, chunks, matrices, variables, operational logic, and intermediate and/or final results from processing of equations, formulas, or operations.

In some embodiments, the memory of the processor 610 and/or the encoder/decoder module 630 is used to store instructions and/or provide working memory for video encoding and decoding functions. In some embodiments, memory external to the processor 610 and/or the encoder/decoder module 630 (e.g., the memory 620 and/or the storage device 640) is used for one or more of these functions and/or, for example, to store the operating system of a television.

The system 600 may obtain or receive information via one or more input devices, interfaces, and/or ports as indicated in input block 605. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 600 to other devices via USB and/or HDMI ports or connections. Various forms of input processing may be implemented, for example, by and/or within a separate input processing device or the processor 610.

The system 600 includes a communication interface 650 that enables wired and/or wireless communication with other devices, e.g., via a communication channel 690 (corresponding to communication channel 52 or 54 in FIG. 5). The communication interface 650 may include one or more transceivers, modems, network cards and the like. The communication channel 690 may be or include wired and/or wireless mediums.

In some embodiments, data may be streamed to the system 600 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 600 via the communication interface 650 and communication channel 690, whereby the system 600 may obtain data streamed from streaming applications (e.g., OTT (Over The Top) services) via various networks, including the Internet. In some embodiments, data is streamed to the system 600 via the input block 605 (e.g., using a set-top box that delivers data via the HDMI connection or the RF connection). In some embodiments, data is received by the system 600 in a non-streaming manner.

The system 600 may provide one or more output signals to one or more output devices. The output devices may include a display device 665 (e.g., touchscreen display, monitor, etc.), an audio device 675 (e.g., speakers), and other peripheral devices 685, including, for example, a stand-alone DVR, a disk player, a stereo system, a lighting system, and other devices that provide a function based on the output of the system 600. The display device 665 can be for a television, tablet, laptop, mobile phone, head-mounted display, or other device. In some embodiments, control signals are communicated between the system 600 and the display device 665, the audio device 675, and/or the peripheral devices 685, enabling device-to-device control with or without user intervention. The output devices may couple to and/or communicate with the system 600 via dedicated connections via respective display, audio, and peripheral interfaces 660, 670, 680. Alternatively, the output devices may couple to and/or communicate with the system 600 via the communication channel 690 and the communication interface 650.

The display device 665 and the audio device 675 may be collocated, integrated, or otherwise combined with the other components of system 600 in a single unit (e.g., a television). Alternatively, the display device 665 and the audio device 675 may be separate from one or more of the other components of the system 600. In embodiments in which the display device 665 and the audio device 675 are external components, the output signals may be provided via dedicated outputs and/or connections, including, for example, HDMI ports, USB ports, or COMP outputs.

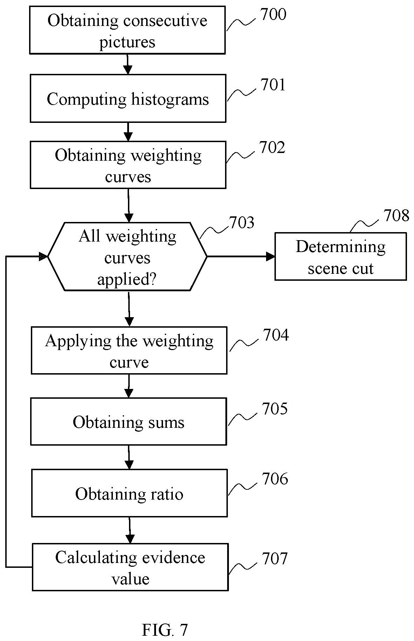

FIG. 7 illustrates a method for detecting scene cuts according to a first embodiment.

The method of FIG. 7 is for example executed by the processor 610, the encoder 630 or the decoder 630.

In the following we take the example of an execution by the processor 610.

In a step 700, the processor 610 obtains two consecutive pictures of a video sequence.

In a step 701, the processor 610 computes a first histogram for the first picture and a second histogram for the second picture.

In a step 702, the processor 610 obtains a plurality of weighting curves. Each weighting curve being intended to weight a value of each bin of an histogram in function of a bin number.

For example, three weighting curves are obtained. In variants, other numbers of weighting curves different from three are obtained.

In an embodiment, the curves of the windows are straight lines, but other curves can be chosen.

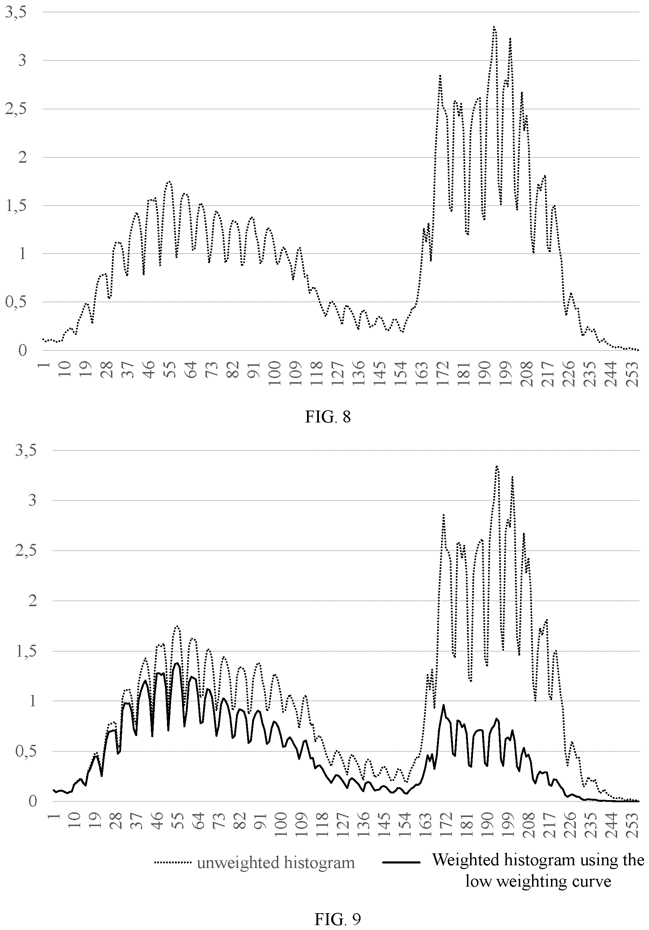

An example of histogram comprising "256" bins is provided by **FIG. 8.**

A low weighting curve is defined for example by the following formula:

$$\text{for } i \text{ in the range } [0\ldots255]:$$

$$lowWeightedHisto[i] = (256 - \text{i}) * histogram[i]$$

where *histogram[i]* represents the bin values of the unweighted histogram and *lowWeightedHisto[i]* represents the bin values of the low weighted histogram.

FIG. 9 illustrates the unweighted histogram of FIG. 8 and a weighted histogram (or low weighted histogram) obtained by applying the low weighting curve to the unweighted histogram of FIG. 8.

The bins values of the middle part and right part of the low weighted histogram are attenuated, the left part being more preserved.

A middle weighting curve is defined for example by the following formula:

$$\text{if } (i < 128)$$

$$midWeightedHisto\ [i] = 2 * (i + 1) * histogram[i]$$

$$\text{else}$$

$$midWeightedHisto\ [i] = 2 * (256 - i) * histogram[i]$$

where *midWeightedHisto[i]* represents the bin values of the middle weighted histogram.

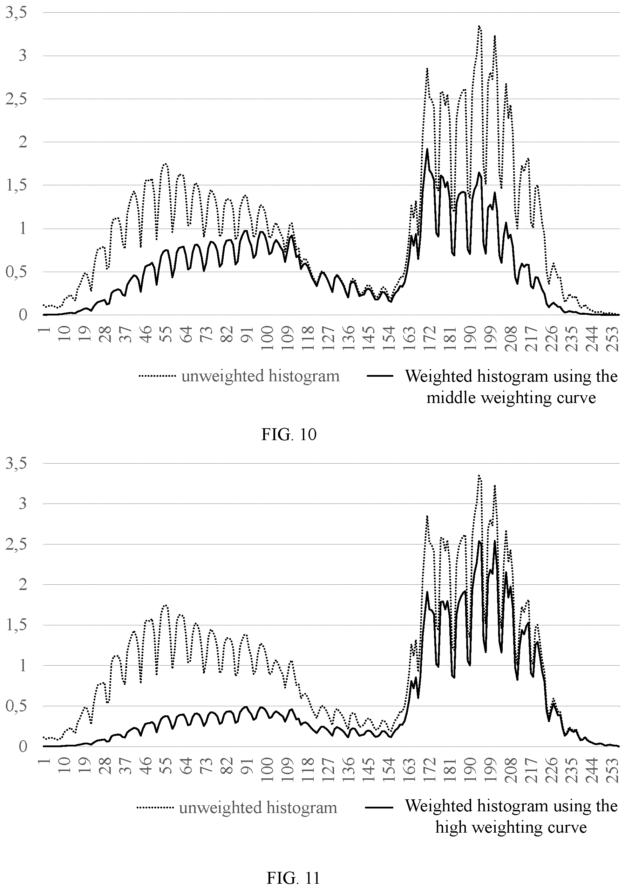

**FIG. 10** illustrates the unweighted histogram of FIG. 8 and a weighted histogram (or middle weighted histogram) obtained by applying the middle weighting curve to the unweighted histogram of FIG. 8.

The bin values of both the left part and of the right part of the histogram are attenuated, the middle part being more preserved.

A high weighting curve is defined for example by the following formula:

$$\text{for } i \text{ in the range } [0...255]:$$

$$highWeightedHisto\ [i] = (i+ 1) * histogram[i]$$

where $highWeightedHisto[i]$ represents the bin values of the high weighted histogram.

**FIG. 11** illustrates the unweighted histogram of FIG. 8 and a weighted histogram (or high weighted histogram) obtained by applying the high weighting curve to the unweighted histogram of FIG. 8.

The bins of the left part and of the middle part of the histogram are attenuated, the right part being more preserved.

We can observe that sums over i of the bin values of the unweighted histogram, the low weighted histogram, the middle weighted histogram and the high weighted histogram have generally different values.

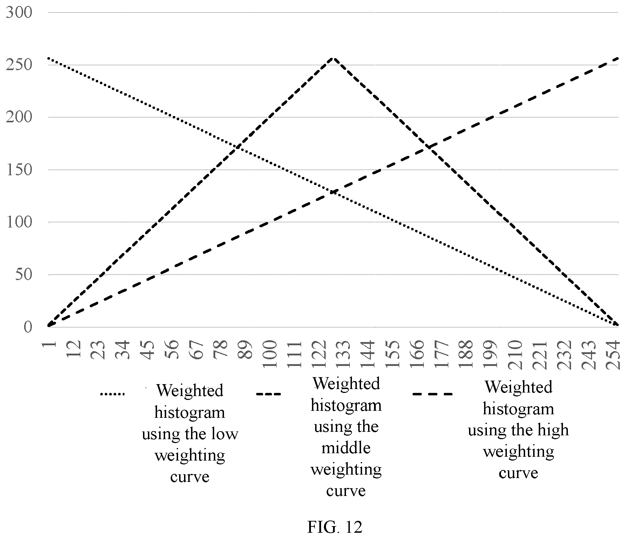

As a conclusion, we can see that a specific part of the histogram is emphasized by each weighting curve. The three examples of weighting curves have shapes illustrated in **FIG. 12**. As can be seen, three bins are privileged: the bin "0" in the low weighted histogram, the bin "128" in the middle weighted histogram, the bin "255" in the high weighted histogram.

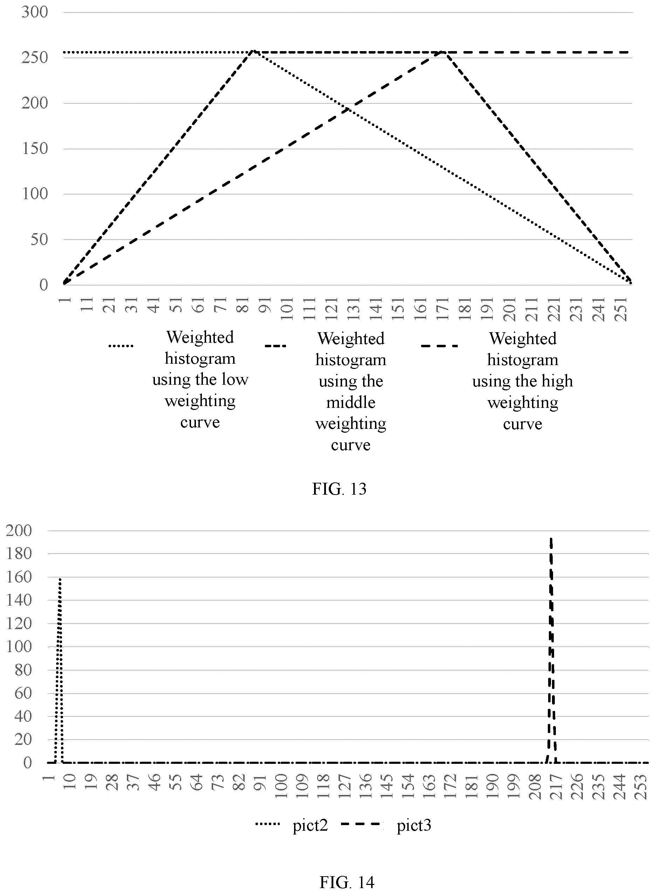

Other weighting curves are possible, to differently emphasize parts of the histogram. For example, weighting curves can be built to preserve entirely a part of the histogram as in FIG. **13.**

The equations below show that the low part of the histogram is entirely preserved in the range [0... 85], that the mid part of the histogram is entirely preserved in the range [86... 170], and that the high part of the histogram is entirely preserved in the range [171... 255]:

$$\text{for } i \text{ in the range } [0...255]:$$

$$\text{if } (i < 86)\ lowWeightedHisto\ [i] = 256 * histogram[i]$$

$$\text{else } lowWeightedHisto\ [i] = 256 * (256 - i) / 170.0f * histogram[i]$$

$$\text{if } (i < 86)\ midWeightedHisto\ [i] = 256 * ((i+1) / 85.0f) * histogram[i]$$

$$\text{else if } (i <= 170)\ midWeightedHisto\ [i] = 256 * histogram[i]$$

$$\text{else } midWeightedHisto\ [i] = 256 * (256 - i) / 85.0f * histogram[i]$$

$$\text{if } (i < 171)\ highWeightedHisto\ [i] = 256 * ((i + 1)/ 170.0f) * histogram[i]$$

$$\text{else } highWeightedHisto\ [i] = 256 * histogram[i]$$

Back to FIG. 7, in a step 703, the processor 610 determines if all weighting curves had been applied to the first and the second histograms.

If no, step 703 is followed by a step 704.

During step 704, a weighting curve is applied by the processor 610 to the first and the second histogram to obtain a weighted first histogram *firstWeightedHisto [i]* and a weighted second histogram *secondWeightedHisto [i].* During the iterations of step 704, the low weighting curve, the middle weighting curve and the high weighing curve are applied successively to obtain weighted first and second histograms. The weighted first and second histograms are respectively a low weighted first histogram *lowFirstWeightedHisto [i]* and low weighted second histogram *lowSecondWeightedHisto [i]* in case of the low weighting curve, a middle weighted first histogram *midFirstWeightedHisto [i]* and middle weighted second histogram *midSecondWeightedHisto [i]* in case of the middle weighting curve and a high weighted first histogram *highFirstWeightedHisto [i]* and high weighted second histogram *highSecondWeightedHisto [i]* in case of the high weighting curve.

In a step 705, the processor 610 integrates the first and the second histograms. During step 705, the processor 610 sums the values of the bins of the first histogram to obtain a first sum *firstSum* and sums the values of the bins of the second histogram to obtain a second sum *secondSum.* In case of the low weighting curve, the first sum *firstSum* is a low first sum *lowFirstSum* and the second sum *secondSum* is a low second sum *lowSecondSum.* In case of the middle weighting curve, the first sum *firstSum* is a middle first sum *midFirstSum* and the second sum *secondSum* is a middle second sum *midSecondSum.* In case of the high weighting curve, the first sum *firstSum* is a high first sum *highFirstSum* and the second sum *secondSum* is a high second sum *highSecondSum.*

An example of algorithm for calculating the first and second sum is below:

$$firstSum = 0$$

$$secondSum = 0$$

$$i = 0$$

$$\text{while } i < 256, \text{ do:}$$

$$firstSum = firstSum + firstWeightedHisto \text{ [i]}$$

$$secondSum = secondSum + secondWeightedHisto \text{ [i]}$$

$$i = i + 1$$

The three sums obtained for the first picture are then compared to the three sums of the second picture. To do so, in a step 706, the processor 610 obtains a ratio of equivalent sums from the first sum and the second sum as follows:

$$\text{if } (firstSum > secondSum)$$

$$ratio = firstSum \,/\, secondSum$$

$$\text{else}$$

$$ratio = secondSum \,/\, firstSum$$

Therefore, a ratio *lowRatio* (respectively *midRatio* and *highRatio*) is obtained from *lowFirstSum* and *lowSecondSum* (from *midFirstSum* and *midSecondSum* and from *highFirstSum* and *highSecondSum).*

Note that none of the first sums and the second sums is equal to zero due to the definition of the weighting curves. At the end, the three ratios are higher than "1" or equal to "1" (when both histograms are alike).

The three ratios express how the windows are evolving from one picture to the following picture. For example, the sum *lowFirstSum* can be "3.2" times larger than the sum *lowSecondSum.* But, at this stage, we don't have any pieces of information regarding the weight of those two sums, i.e. regarding the number of pixels included in both the *lowFirstSum* and the *lowSecondSum.* Then, we introduce three values called *evidence values* (*lowEvidence*, *midEvidence* and *highEvidence)* allowing to better take account of the numbers of pixels in each sum.

In a step 707, the processor 610 calculates an evidence value *Evidence* from the first *sum firstSum,* the second sum *secondSum* and the ratio *ratio* as follows:

$$Evidence = ratio * |\, firstSum - secondSum \,| \,/\, 128 = \max (firstSum, secondSum) * (ratio -1) \,/\, 128 \qquad \text{(eq. 1)}$$

When the weighting curve is the low (respectively middle and high) weighting curve, the evidence value *lowEvidence* is calculated from the first sum *lowFirstSum* (respectively *midFirstSum* and *highFirstSum),* the second sum *lowSecondSum* (respectively *midSecondSum* and *highSecondSum*) and the ratio *lowRatio* (respectively *midRatio* and *highRatio*).

The "128" factor is related to a definition of the weighting curves, where a "256" factor is introduced.

For example, if the bin "0" in a low weighted histogram changes from "256" (or "1.0" if normalized) to "128" (or "0.5" if normalized) (i.e. *lowFirstWeightedHisto* [0] = 1.0 (or 256) and *lowSecondWeightedHisto* [0] = 0.5 (or 128)) and the bin "255" of the high weighted histogram changes from "0" (or "0.0" if normalized) to "128" (or "0.5" if normalized) (i.e. *highFirstWeightedHisto* [255] = 0.0 (or 0) and *highSecondWeightedHisto* [255] = 0.5 (or 128)), which means that the previous picture is totally black, and that the current one is half black and half white, the following values are obtained (see table TAB1)

Table TAB 1

|  | First picture | Second picture |
|---|---|---|
| *low WeightedHisto[0]* | 1.0 (256) | 0.5 (128) |
| *highWeightedHisto[255]* | 0.0 (0) | 0.5 (128) |
| *lowSum* | *lowFirstSum*=256 | *lowSecondSum*=128.5 |
| *highSum* | *highFirstSum*=1.0 | *highSecondSum*=128.5 |

$$lowRatio = lowFirstSum / lowSecondSum = 256 / 128.5 = 1.99$$

and then $lowEvidence = lowRatio * \frac{|lowFirstSum - lowSecondSum|}{128} = (1.99 * (256$ - 128.5) / 128 = 1.97

highRatio = *highFirstSum* / *highSecondSum* = 128.5 / 1.0 = 128 and then

$$highEvidence = highRatio * \frac{|highFirstSum - highSecondSum|}{128} = 128.5 * |1 - 128.5| / 128 = 127.5$$

As can be seen, the value of *highEvidence* is quite high. This is due to the value of *highRatio* which is high because the first picture is all black. To counteract this extreme problem, ratios are clipped to, for example, "2" (another value could be possible). That means that the ratios are in the range [1...2]. Then, the previous calculation becomes:

$$highRatio = 128.5 * |1 - 128.5| / 128 = 128 \text{ clipped to } 2$$

and then *highEvidence* = 2 * |1 - 128.5| / 128 = 1.99

Two thresholds are used to decide whether there is a scene cut between the first and the second picture. The following algorithm applies:

- First, a boolean value *Result* is initialized to false.
- If one of the evidence values (i.e., *lowEvidence, midEvidence, highEvidence*) is higher than a value *VAL,* a cut is detected: *Result* becomes true. In one embodiment, using *VAL*=0.5 provides good results but other values may be used.
- If the sum of the evidence values (i.e., *lowEvidence + midEvidence + highEvidence)* is higher than a value *SumVAL*, a cut is detected: *Result* becomes true. In one embodiment, using *SumVAL*=1 provides good results, but other values may be used.

At the end, *Result* is either false (then no cut is detected) or true (then a cut is detected).

One can note that the method of FIG. 7 can be combined with difference-based methods and the methods disclosed in the European patent application EP23305120.0.

*Result* can take two values: either true or false.

In a variant, *Result* may take the value of the highest evidence value or of the sum of all the evidence values or any other combination of evidence values. This may be the case if the method of FIG. 7 is combined with other scene cut detection methods that don't provide a Boolean result but numerical results.

More generally, the method of FIG. 7 can be used when two other and different cut detection methods return inconsistent results, i.e. one method detects a cut, and the other doesn't detect any cut. The result of the method of FIG. 7 is then used as the final confirmation for one of the other methods.

One can note that, in a variant, this factor "128" can be omitted from the equation eq. 1 (i.e., replaced by a factor equal to "1"). In that case, Values *VAL* and *SumVAL* should be adapted, i.e, *VAL*=0.5×128 and *SumVAL*=1×128.

In the following, we provide some examples of use of the method of FIG. 7. In these examples, we use the Bhattacharyya distance as a bin-to-bin distance, with a threshold of valid cut detection equal to "0.1". That means that when the Bhattacharyya distance returns a value lower than "0.1", it is considered that there is no cut between the two images. Otherwise, a cut is detected.

**First example:**

**FIG. 14** illustrates histograms of pictures 2 and 3 of a video sequence.

Both histograms are made of one peak. If we consider that the bins are numbered from "0" to "255", both pictures are defined as follows:

picture 2: bin[4..5] = {98.191788, 157.808212}
picture 3: bin[213..215] = {10.10526, 195.3684, 50.52631}

One can note that, the bins that are not mentioned have a value equal to zero.

As we can see, the sum of bins for each image is equal to 256.

Bhattacharyya distance gives there a result equal to "1" (because when a bin is different from "0" in one image, the corresponding bin in the other image is "0"), which means that this distance detects a cut. The method of the European patent application EP23305120.0 doesn't detect a cut because of the limited number of non-empty bins. We are there in a case where both methods give conflicting results.

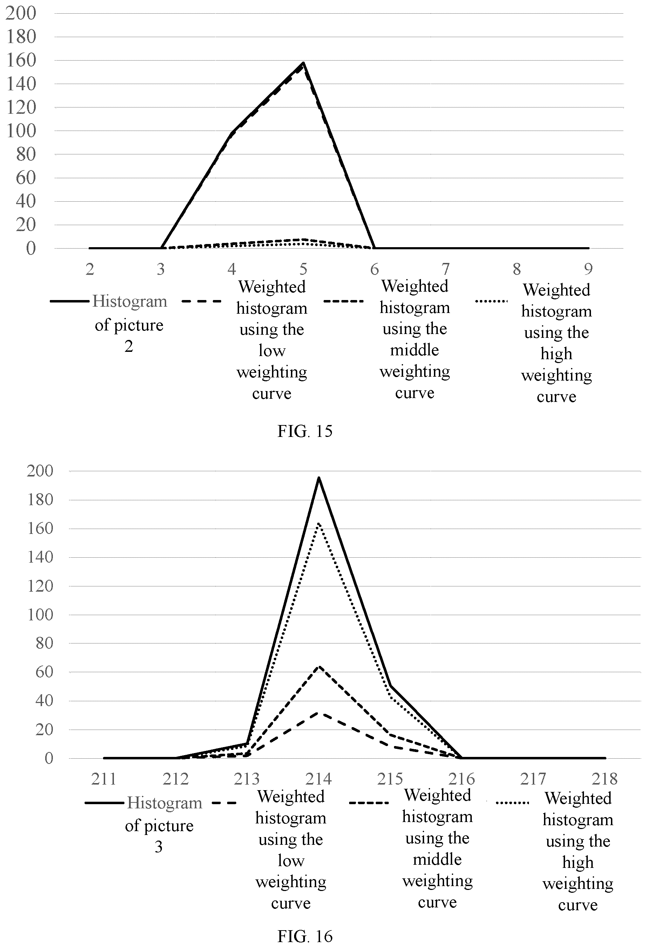

**FIG. 15** illustrates results of the method of FIG. 7 with various histograms obtained from picture 2.

Regarding picture 2 in Fig. 15, the middle weighted histogram values *midFirstWeightedHisto[i]* and high weighted histogram values *highFirstWeightedHisto[i]* are close to "0" because the peak in the histogram is close to bin "0".

**FIG. 16** illustrates results of the method of FIG. 7 with various histograms obtained from picture 3.

Regarding picture 3 in Fig. 16, the low weighted histogram values *lowSecondWeightedHisto[i]* and middle weighted histogram values *midSecondWeightedHisto[i]* are not so close to "0" because the peak in the histogram is not so close to bin "255".

By doing the calculations of the three ratios and of the three evidence values using the method of FIG. 7, we get results represented in table TAB2.

Table TAB2

|  | firstSum (picture 2) | secondSum (picture 3) | ratio | Clipped ratio | Evidence value |
|---|---|---|---|---|---|
| High weighting curve | 5.616438 | 215.157867 | 38.308598 | 2 | 3.274085 |
| middle weighting curve | 11.232876 | 83.684204 | 7.449936 | 2 | 1.132052 |
| low weighting curve | 251.383545 | 41.842102 | 6.007909 | 2 | 3.274085 |

All the evidence values of the invention are higher than *VAL*=0.5 (and then their sum is higher than "1"). Then *Result* is equal to true: a scene cut is detected. As the two other cut detection methods give inconsistent results, the method of FIG. 7 confirms the detection of a scene cut by the Bhattacharyya distance.

**Second example:**

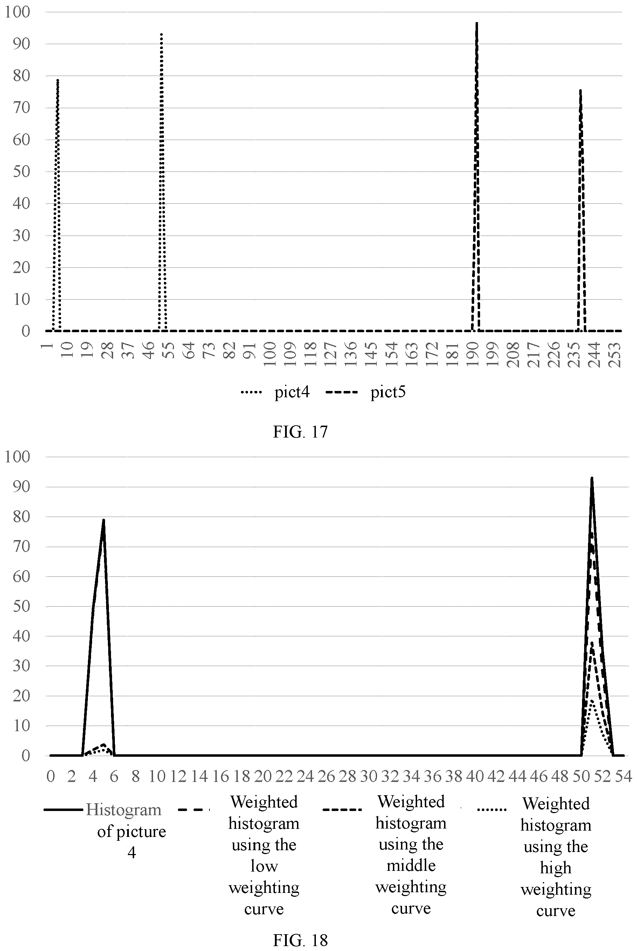

**FIG. 17** illustrates histograms of pictures 4 and 5 of a video sequence.

Both pictures are made of two peaks. If we consider that the bins are numbered from "0" to "255", both pictures are defined as follows:

$$\text{picture 4: bin[5..6]} = \{\ 49.095898,\ 78.904121\}\ \text{sum of bins} = 128$$

$$\text{bin[51..52]} = \{\ 92.931519,\ 35.068497\}\ \text{sum of bins} = 128$$

$$\text{image 5: bin[190..191]} = \{\ 31.561646,\ 96.43837\}\}\ \text{sum of bins} = 128$$

$$\text{bin[237..238]} = \{\ 75.397263,\ 52.602741\}\}\ \text{sum of bins} = 128$$

One can note that, the bins that are not mentioned have a value equal to zero. As we can see, the sum of bins for each picture is equal to "256".

The Bhattacharyya distance gives there a result equal to "1", which means that this distance detects a cut. The method of the European patent application EP23305120.0 doesn't detect a cut because of the limited number of non-empty bins. We are there again in a case where both methods give conflicting results.

**FIG. 18** illustrates results of the method of FIG. 7 with various histograms obtained from picture 4.

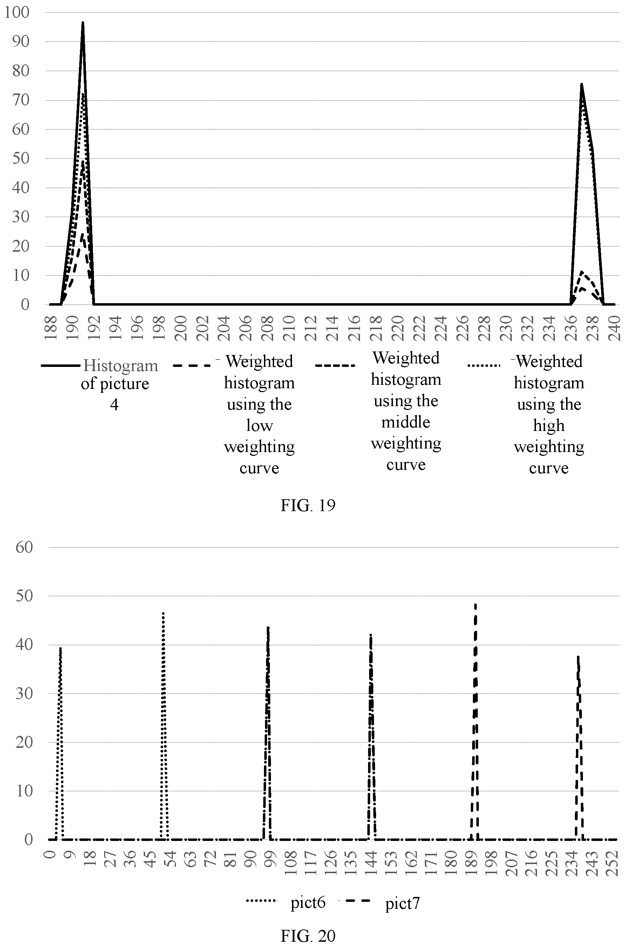

**FIG. 19** illustrates results of the method of FIG. 7 with various histograms obtained from picture 5.

By doing the calculations of the three ratios and of the three evidence values using the method of FIG. 7, we get results represented in table TAB3.

Table TAB3

|  | firstSum (picture 4) | secondSum (picture 5) | ratio | Clipped ratio | Evidence value |
|---|---|---|---|---|---|
| High weighting curve | 28.945210 | 215.082214 | 7.430667 | 2 | 2.908391 |
| Middle weighting curve | 57.890419 | 83.835625 | 1.448178 | 1.448178 | 0.293541 |
| Low weighting curve | 228.054825 | 41.917812 | 5.440523 | 2 | 2.908391 |

The results of picture 5 seem strangely to be the same as the ones of picture 3 in the first example, even if both histograms are different: the histogram of picture 3 has one peak, while histogram of picture 5 has two peaks. But considering, the definition of the weighting curves, the fact that the peak of picture 3 is exactly between the peaks of picture 5, the fact that both peaks of picture 5 have the same number of pixels, its logical to obtain the same results.

If we compare the results to the ones of the first example, we can see that the three evidence values are decreasing. This is because two peaks have been introduced which are closer to the center of the histogram, i.e. there are less differences between pictures 4 and 5 than there are between pictures 2 and 3 in the first example. This is particularly true for the middle weighting curve, whose ratio is not clipped, and whose evidence value is much closer to zero: *firstSum* and *secondSum* for the middle weighting first and second histograms are much closer than they are for the low weighting and high weighting first and second histograms.

Two evidence values are higher than *VAL*=0.5 (and then the sum of all evidence values is higher than *SumVAL*=1). Then *Result* is equal to true: the method of FIG. 7 detects a cut. As the two other cut detection methods give inconsistent results, the method of FIG. 7 confirms the detection of a scene cut by the Bhattacharyya distance.

**Third example:**

**FIG. 20** illustrates histograms of pictures 6 and 7 of a video sequence.

Both histograms are made of four peaks. If we consider that the bins are numbered from "0" to "255", both histograms are defined as follows:

$$\text{picture 6: bin[4..5]} = \{ 24.547947, 39.452053\} \text{ sum of bins} = 64$$

$$\text{bin[51..52]} = \{ 46.465759, 17.534246\} \text{ sum of bins} = 64$$

$$\text{bin[97..98]} = \{ 20.164385, 43.835613\} \text{ sum of bins} = 64$$

$$\text{bin[144..145]} = \{ 42.082195, 21.917809\} \text{ sum of bins} = 64$$

$$\text{picture 7: bin[97..98]} = \{ 20.164543, 43.835896\}\} \text{ sum of bins} = 64$$

$$\text{bin[144..145]} = \{ 42.081619, 21.91708\}\} \text{ sum of bins} = 64$$

$$\text{bin[190..191]} = \{ 15.781477, 48.218967\}\} \text{ sum of bins} = 64$$

$$\text{bin[237..238]} = \{ 37.698555, 26.301878\}\} \text{ sum of bins} = 64$$

One can note that, the bins that are not mentioned have a value equal to zero.

As we can see, the sum of bins for each image is equal to "256". We can see also that both pictures share one half of their histogram, while the other half goes from the lowest bins to the highest ones.

The Bhattacharyya distance give there a result equal to "0.707", which means that this distance detects a cut. The distance is no more equal to "1" because both pictures have common bins. The method of the European patent application EP23305120.0 doesn't detect a cut because of the limited number of non-empty bins. We are there again in a case where both methods give conflicting results.

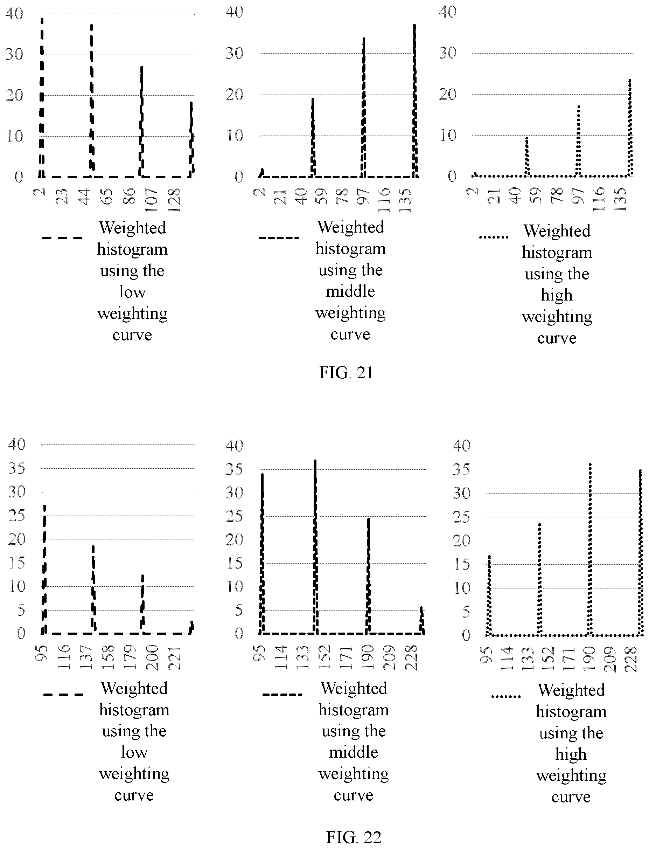

**FIG. 21** illustrates results of the method of FIG. 7 with various histograms obtained from picture 6.

**FIG. 22** illustrates results of the method of FIG. 7 with various histograms obtained from picture 7.

By doing the calculations of the three ratios and of the three evidence values using the method of FIG. 7, we get results represented in table TAB4.

Table TAB4

|  | firstSum (picture 6) | secondSum (picture 7) | ratio | Clipped ratio | Evidence value |
|---|---|---|---|---|---|
| High weighting curve | 75.479454 | 168.548096 | 2.233033 | 2 | 1.454198 |
| Middle weighting curve | 134.116440 | 147.088547 | 1.096723 | 1.096723 | 0.111147 |
| Low weighting curve | 181.520538 | 88.451912 | 2.052195 | 2 | 1.454197 |

If we compare the results with the ones of the first and the second example, we can see that the three evidence values are decreasing, especially the one related to the middle weighting curve. The reason is that half of the content of the histograms is the same, and this is for middle level values, i.e. it concerns two peaks located at bins 97,98 and at bins 144,145.

Two of the evidence values are higher than *VAL=0.5*. Their sum is higher than *SumVAL*=1. Then *Result* is equal to true: the method of FIG. 7 detects a cut. As the two other cut detection methods give inconsistent results, the method of FIG. 7 confirms the detection of a scene cut by the Bhattacharyya distance.

**Fourth example:**

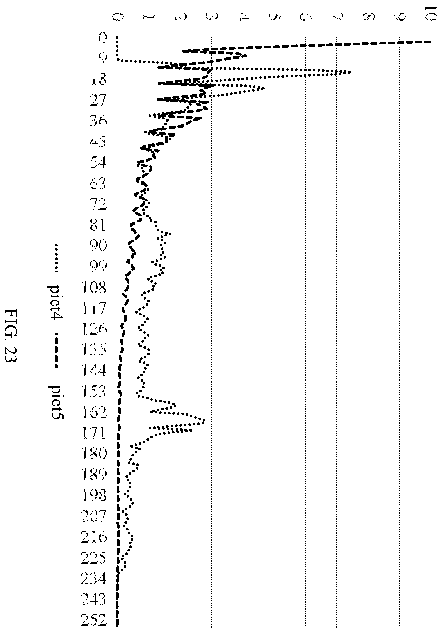

**FIG. 23** illustrates histograms of pictures 4 and 5 of a video sequence.

Picture 4 is quite bright visually, while picture 5 is quite dark visually.

The Bhattacharyya distance give there a result equal to "0.60", which means that this distance detects a cut. The method of the European patent application EP23305120.0, when used with the thresholds as defined in this patent application, detects also a cut (the sum of the differences (i.e., $f(histo1[i]) - f(histo2[i])$ ) as defined in the European patent application EP23305120.0 is equal to 3.56 and the number of differences (i.e., number of bins for which an absolute value of a difference between a first value representative of a number of samples represented by a bin of the first histogram and a second value representative of a number of samples represented by a corresponding bin of the second histogram) is higher than a third value) as defined in the European patent application EP23305120.0 is equal to 187: these numbers validate a presence of a cut when used with the thresholds as defined in this patent application). Both methods agree.

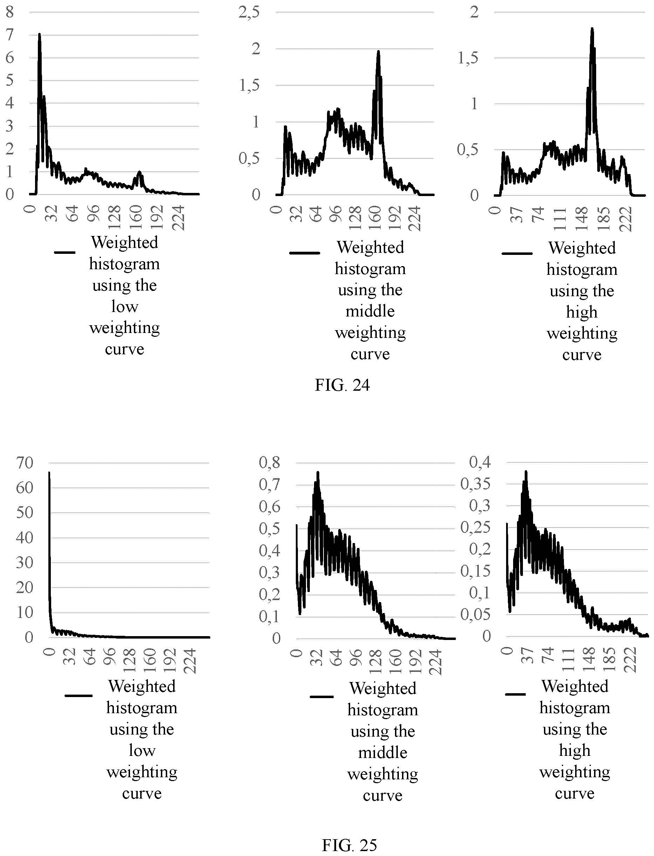

**FIG. 24** illustrates results of the method of FIG. 7 with various histograms obtained from picture 4.

**FIG. 25** illustrates results of the method of FIG. 7 with various histograms obtained from picture 5.

By doing the calculations of the three ratios and of the three evidence values using the method of FIG. 7, we get results represented in table TAB5.

Table TAB5

|  | firstSum (picture 4) | SecondSum (picture 5) | ratio | Clipped ratio | Evidence value |
|---|---|---|---|---|---|
| High weighting curve | 89.508179 | 27.080172 | 3.305303 | 2 | 0.975438 |
| Middle weighting curve | 130.710495 | 51.101391 | 2.557866 | 2 | 1.243892 |
| Low weighting curve | 167.491821 | 229.919754 | 1.372722 | 1.372722 | 0.669502 |

All the evidence values are higher than *VAL=0.5*. Their sum is higher than *SumVAL*=1. Then *Result* is equal to true: the method of FIG. 7 detects a cut. The two other cut detection methods give the same result.

**Fifth example:**

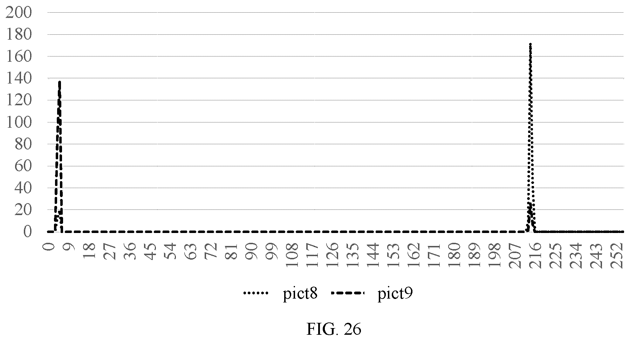

**FIG. 26** illustrates histograms of pictures 8 and 9 of a video sequence.

Both histograms are made of two peaks. The peaks are located at the same position, but with a very different value from one picture to the other one. This situation can typically appear in two black and white patterns when the first patten consists of a small black rectangle above a white background, followed by a second pattern which consists in a small white rectangle above a black background.

If we consider that the bins are numbered from "0" to "255", both histograms are defined as follows:

$$\text{picture 8: bin}[4..5] = \{ 11.848665,\ 19.04178 \}\ \text{sum of bins} = 31$$

$$\text{bin}[213..215] = \{ 8.886498,\ 171.79393,\ 44.429146 \}\ \text{sum of bins} = 225$$

$$\text{picture 9: bin}[4..5] = \{ 85.479774,\ 137.376205 \}\ \text{sum of bins} = 223$$

$$\text{bin}[213..215] = \{ 1.307705,\ 25.29435,\ 6.541969 \}\ \text{sum of bins} = 33$$

One can note that, the bins that are not mentioned have a value equal to zero. As we can see, the sum of bins for each picture is equal to "256".

The Bhattacharyya distance gives there a result equal to "0.58", which means that this distance detects a cut. The method of the European patent application EP23305120.0 doesn't detect a cut because of the limited number of non-empty bins. We are there again in a case where both methods give conflicting results.

Following are the results of the method of FIG. 7, the horizontal axis corresponding to the bin numbers:

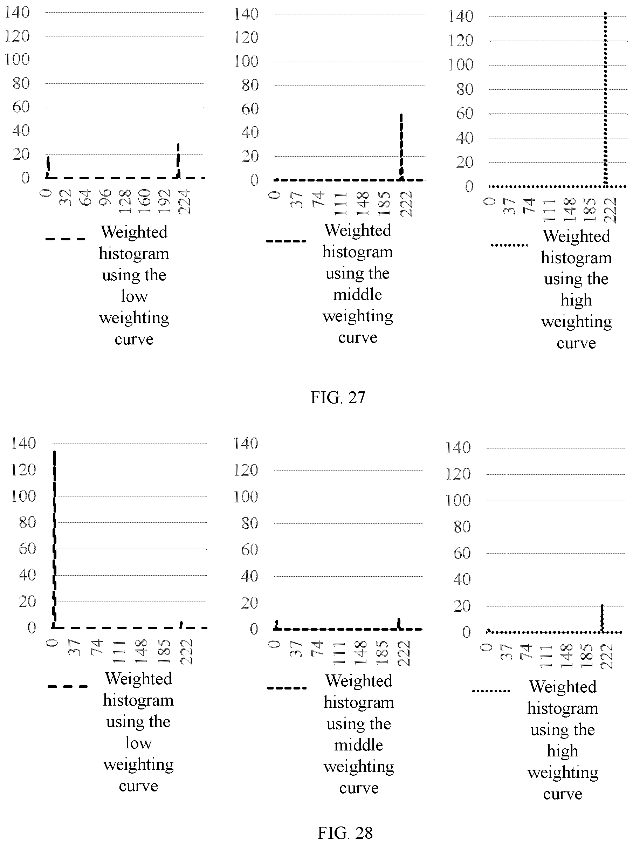

**FIG. 27** illustrates results of the method of FIG. 7 with various histograms obtained from picture 8.

**FIG. 28** illustrates results of the method of FIG. 7 with various histograms obtained from picture 9.

By doing the calculations of the three ratios and of the three evidence values using the method of FIG. 7, we get results represented in table TAB6.

Table TAB6

|  | firstSum (picture 8) | secondSum (picture 9) | ratio | Clipped ratio | Evidence value |
|---|---|---|---|---|---|
| High weighting curve | 189.873413 | 32.745529 | 5.798453 | 2 | 2.455123 |
| Middle weighting curve | 74.941826 | 20.613052 | 3.635649 | 2 | 0.848887 |
| Low weighting curve | 67.126602 | 224.254471 | 3.340769 | 2 | 2.455123 |

All the evidence values are higher than *VAL=0.5*. Their sum is higher than *SumVAL=1*. Then *Result* is equal to true: the method of FIG. 7 detects a cut. As the two other cut detection methods give inconsistent results, the method of FIG. 7 confirms the detection of a scene cut by the Bhattacharyya distance.

Other values of *VAL* and *SumVAL* may be used. For instance, with *VAL=0.2* and *SumVAL*=0.35 a scene cut had been detected in two successive "real world" picture, both being rather dark or both being rather bright without changing the results that were obtained with the first, second, third and fourth examples.

Until now, we have used three weighting curves to discriminate the different parts of the histogram. More weighting curves can be used which enables to have more discrimination.

In a second embodiment of the method of Fig. 7, a threshold *TH* and a transition zone *transitionZone* are introduced which allow obtaining a value called *trigger* for each weighting curve (i.e., a value *lowTrigger* for the low weighting curve, a value *midTrigger* for the middle weighting curve and a value *highTrigger* for the high weighting) curve as follows:

$$\text{if} \, (ratio < TH - transitionZone/2)$$

$$trigger = 0$$

$$\text{else if} \, (ratio > TH + transitionZone/2)$$

$$trigger = 1$$

$$\text{else}$$

$$trigger = (ratio - (TH - transitionZone/2)) \, / \, transitionZone$$

where ratio is either *lowRatio, midRatio* or *highRatio* depending on the weighting curve.

Note that *trigger* is a value in [0,1].

For example, *TH* = 1.15 and *transitionZone* = 0.1. In that case, the above algorithm becomes:

$$\text{if} \, (ratio < 1.1)$$

$$trigger = 0$$

$$\text{else if} \, (ratio > 1.2)$$

$$trigger = 1$$

$$\text{else}$$

$$trigger = (ratio - 1.1) \, / \, 0.1$$

In other words:

changes in between *firstSum* and *secondSum* which are lower than 10% are ignored: *trigger* is set to "0";
changes between *firstSum* and *secondSum* which are higher than 20% are considered as a cut: *trigger* is set to "1"
a zone of transition from "0" to "1" is established for changes within a range of 10% to 20%.

In one embodiment, *TH* = 1.15 and *transitionZone* = 0.1 values are giving consistent results. Other values for *TH* and *transitionZone* may be used.

New evidence values *evidence* (i.e., *lowEvidence, midEvidence* and *highEvidence*) are then defined for each weighting curve (i.e., for each value of *trigger* respectivelly *low Trigger, midTrigger* and *highTrigger*) with the following equation:

$$evidence = trigger * | \, firstSum - secondSum \, | \, / \, 128$$

As *trigger* is in the [0...1] range, *evidence* is in the [0...2] range (exactly in the [0... 1,9921875] range), because *firstSum* and *secondSum* are in the range [1...256], then maximum value of |*firstSum- secondSum*| is |256 -1| = 255, and 255 / 128 = 1,9921875.

Using the threshold *TH* and the transition zone *transitionZone* defined above (*TH* = 1.15 and *transitionZone* = 0.1), *Result* can be defined as follows:

*Result* is initialized to false;
If one of the evidence values is higher than "0.25", *Result* is set to true, i.e., a scene cut is validated;
If the sum of the evidence values is higher than "0.5", Result is set to true, i.e., a scene cut is validated.
We give hereafter the results for several examples using this new embodiment.

**Sixth example:**

Pictures are the same as the ones of the first example.

Table TAB6

|  | ratio | Ratio first embodiment | Evidence first embodiment | Trigger 2nd embodiment | Evidence 2nd embodiment |
|---|---|---|---|---|---|
| High weighting curve | 38.308598 | 2 | 3.274085 | 1 | 1.637042 |
| Middle weighting curve | 7.449936 | 2 | 1.132052 | 1 | 0.566026 |
| Low weighting curve | 6.007909 | 2 | 3.274085 | 1 | 1.637043 |

We can see that the results of the first embodiment are two times the result of the second embodiment. The reason is:

For the first embodiment, ratios are all clipped to "2";

For the second embodiment, ratios are all higher than "1.2", then all triggers are equal to "1".

As ratios of the method of the first embodiment and triggers of the second embodiment are all multiplied by the same values (which are proportional to the differences of weighted histograms), evidence values are at the end at a two-to-one ratio.

All the evidence values are higher than "0.25". Their sum is higher than "0.5". Then *Result* is true: the method according the first embodiment and to the second embodiment detect a cut.

**Seventh example:**

Pictures are the same as the ones of the fifth example.

Table TAB7

|  | ratio | Ratio first embodiment | Evidence first embodiment | Trigger second embodiment | Evidence second embodiment |
|---|---|---|---|---|---|
| High weighting curve | 5.798453 | 2 | 2.455123 | 1 | 1.227562 |
| Middle weighting curve | 3.635649 | 2 | 0.848887 | 1 | 0.424444 |
| Low weighting curve | 3.340769 | 2 | 2.455123 | 1 | 1.227561 |

Again, and for the same reason, we can see that the results of the first embodiment are two times the result of the second embodiment.

All the evidence values are higher than "0.25". Their sum is higher than "0.5". Then *Result* is set to true: the method according to the first and second embodiments detect a cut.

**eighth example:**

Pictures are the same as the ones of the fourth example.

This concerns the transition between two pictures of real scenes, the first picture being rather bright and the second one rather dark.

Table TAB8

|  | ratio | Ratio first embodiment | Evidence first embodiment | Trigger second embodiment | Evidence second embodiment |
|---|---|---|---|---|---|
| High weighting curve | 3.305303 | 2 | 0.975438 | 1 | 0.487719 |
| Middle weighting curve | 2.557866 | 2 | 1.243892 | 1 | 0.621946 |
| Low weighting curve | 1.372722 | 1.372722 | 0.669502 | 1 | 0.487718 |

All the evidence values are higher than "0.25". Their sum is higher than "0.5". Then *Result* is set to true: the method according to the first and the second embodiment detect a cut. The two other cut detection methods give the same result (the three methods agree).

One or more embodiments provide a computer program comprising instructions which when executed by one or more processors cause such processors to perform the methods according to any of the embodiments described above. One or more embodiments also provide a computer readable storage medium having stored thereon instructions for implementing the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the cut detection method described above may be implemented as one or more modules and modified according to the various embodiments of the present disclosure.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

We described above a number of embodiments. Features of these embodiments can be provided alone or in any combination. Further, embodiments can include one or more of the following features, devices, or aspects, alone or in any combination, across various claim categories and types:

- A TV, set-top box, cell phone, tablet, personal computer or other electronic device that performs at least one of the embodiments described, and that displays (e.g. using a monitor, screen, or other type of display) a resulting picture.
- A TV, set-top box, cell phone, tablet, personal computer or other electronic device that tunes (e.g. using a tuner) a channel to receive a signal including a reconstructed video content, and performs at least one of the embodiments described.
- A TV, set-top box, cell phone, tablet, or other electronic device that receives (e.g. using an antenna) a signal over the air that includes a reconstructed video content, and performs at least one of the embodiments described.

**Claims**

1. A method comprising:

   obtaining (700) two consecutive pictures of a video sequence;
   computing (701) a first histogram of a first picture of the two consecutive pictures and a second histogram of a second picture of the two consecutive pictures;
   obtaining (702) a plurality of weighting curves, each weighting curve weighting a value of each bin of an histogram in function of a bin number;
   for each weighting curve of the plurality:

   applying (704) the weighting curve to the first and the second histograms to obtain weighted first and second histograms;
   summing (705) values of bins of the weighted first histogram to obtain a first sum and summing values of bins of the weighted second histogram to obtain a second sum;
   obtaining (706) a ratio of sums from the first sum and the second sum; and,
   calculating (707) an evidence value from the first sum, the second sum and the ratio; and,
   determining (708) that a scene cut occurs between the first and the second pictures based on at least one of the evidence values.

2. The method of claim 1 wherein, a scene cut is detected responsive to at least one of the evidence values is larger than a first value.

3. The method of claim 1 or 2 wherein, a scene cut is detected responsive to a sum of the evidence values is larger than a second value.

4. The method of any previous claim wherein, the ratio of sums is obtained by dividing the first sum by the second sum responsive to the first sum is higher than the second sum or by dividing the second sum by the first sum otherwise.

5. The method of any previous claim wherein the evidence value is calculated as follows:

$$Evidence = ratio * |\,firstSum - secondSum\,|$$

   where *evidence* is the evidence value, *ratio* is the ratio clipped in a range of allowed values, *firstSum* is the first sum and *secondSum* is the second sum.

6. The method of any previous claim from claim 1 to 4 wherein, during the calculating of an evidence value, a trigger value is determined based on a comparison of the ratio with a third value, the evidence value being calculated using the trigger value.

7. The method of claim 6 wherein the evidence value is calculated as follows:

$$evidence = trigger * |\,firstSum - secondSum\,|$$

   Where *evidence* is the evidence value, *trigger* is the trigger value, *firstSum* is the first sum and *secondSum* is the second sum.

8. The method of claim 6 or 7 wherein the third value is a combination of a threshold value and a value representing a transition zone.

9. A device comprising electronic circuitry configured for:

   obtaining (700) two consecutive pictures of a video sequence;
   computing (701) a first histogram of a first picture of the two consecutive pictures and a second histogram of a second picture of the two consecutive pictures;
   obtaining (702) a plurality of weighting curves, each weighting curve weighting a value of each bin of an histogram in function of a bin number;
for each weighting curve of the plurality:

applying (704) the weighting curve to the first and the second histograms to obtain weighted first and second histograms;
summing (705) values of bins of the weighted first histogram to obtain a first sum and summing values of bins of the weighted second histogram to obtain a second sum;
obtaining (706) a ratio of sums from the first sum and the second sum; and,
calculating (707) an evidence value from the first sum, the second sum and the ratio; and,
determining (708) that a scene cut occurs between the first and the second pictures based on at least one of the evidence values.

10. The device of claim 9 wherein, a scene cut is detected responsive to at least one of the evidence values is larger than a first value.

11. The device of claim 9 or 10 wherein, a scene cut is detected responsive to a sum of the evidence values is larger than a second value.

12. The device of any previous claim from claim 9 to 11 wherein, the ratio of sums is obtained by dividing the first sum by the second sum responsive to the first sum is higher than the second sum or by dividing the second sum by the first sum otherwise.

13. The device of any previous claim from claim 9 to 12 wherein the evidence value is calculated as follows:

$$Evidence = ratio * | firstSum - secondSum |$$

where *evidence* is the evidence value, *ratio* is the ratio clipped in a range of allowed values, *firstSum* is the first sum and *secondSum* is the second sum.

14. The device of any previous claim from claim 9 to 12 wherein, during the calculating of an evidence value, a trigger value is determined based on a comparison of the ratio with a third value, the evidence value being calculated using the trigger value as follows:

$$evidence = trigger * | firstSum - secondSum |$$

where *evidence* is the evidence value, *trigger* is the trigger value, *firstSum* is the first sum and *secondSum* is the second sum.

15. Non-transitory information storage medium storing program code instructions for implementing the method according to any previous claim from claim 1 to 8.

normalized histograms of pictures 19 and 20

•••••• Picture 19 ——— Picture 20

FIG. 1

normalized histograms of pictures 20 and 21

•••••• Picture 20 ——— Picture 21

FIG. 2

normalized histograms of pictures 1 and 2

•••• Picture 1 ——— Picture 2

FIG. 3

normalized histograms of pictures 1 and 2: bins 250 to 256

■ Picture 1    ▦ Picture 2

FIG. 4

FIG. 5

FIG. 6

FIG. 7

FIG. 8

·········· unweighted histogram     —— Weighted histogram using the low weighting curve

FIG. 9

unweighted histogram — Weighted histogram using the middle weighting curve

FIG. 10

unweighted histogram — Weighted histogram using the high weighting curve

FIG. 11

FIG. 12

FIG. 13

FIG. 14

FIG. 15

FIG. 16

..... pict4    ---- pict5

FIG. 17

——— Histogram of picture 4    — — Weighted histogram using the low weighting curve    ---- Weighted histogram using the middle weighting curve    ....... Weighted histogram using the high weighting curve

FIG. 18

—— Histogram of picture 4   ‒ ‒ ‒ Weighted histogram using the low weighting curve   ‒ ‒ ‒ ‒ Weighted histogram using the middle weighting curve   ........ Weighted histogram using the high weighting curve

FIG. 19

........ pict6   ‒ ‒ pict7

FIG. 20

FIG. 21

FIG. 22

FIG. 23

Weighted
histogram
using the
low
weighting
curve

Weighted
histogram
using the
middle
weighting
curve

Weighted
histogram
using the
high
weighting
curve

FIG. 24

Weighted
histogram
using the
low
weighting
curve

Weighted
histogram
using the
middle
weighting
curve

Weighted
histogram
using the
high
weighting
curve

FIG. 25

······ pict8  ▪▪▪▪ pict9

FIG. 26

Weighted histogram using the low weighting curve

Weighted histogram using the middle weighting curve

Weighted histogram using the high weighting curve

FIG. 27

Weighted histogram using the low weighting curve

Weighted histogram using the middle weighting curve

Weighted histogram using the high weighting curve

FIG. 28

Europäisches
Patentamt

European
Patent Office

Office européen
des brevets

## EUROPEAN SEARCH REPORT

**Application Number**

EP 24 30 7060

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2024/160604 A1 (INTERDIGITAL CE PATENT HOLDINGS SAS [FR]) 8 August 2024 (2024-08-08) * page 16, line 26 - page 18, line 18; figures 7,8 * ----- | 1-15 | INV. H04N5/14 G06V20/40 ADD. H04N21/44 |
| A | ZHANG ET AL: "A New Shot Boundary Detection Algorithm", ADVANCES IN MULTIMEDIA INFORMATION PROCESSING : PROCEEDINGS / PCM 2001, SECOND IEEE PACIFIC RIM CONFERENCE ON MULTIMEDIA, BEIJING, CHINA, OCTOBER 24 - 26, 2001 (BOOK SERIES: LECTURE NOTES IN COMPUTER SCIENCE - LNCS); [LECTURE NOTES IN COMPUTER SCIENC, vol. 2195, 24 October 2001 (2001-10-24), pages 63-70, XP002528778, DOI: 10.1007/3-540-45453-5_9 ISBN: 978-3-540-42680-6 * page 64, paragraph 3 - page 65, paragraph 1 * ----- | 1-15 | H04N19/87 |

**TECHNICAL FIELDS SEARCHED (IPC)**

H04N
G06V

The present search report has been drawn up for all claims

| Place of search | Date of completion of the search | Examiner |
|---|---|---|
| Munich | 29 April 2025 | Beaudoin, Olivier |

EPO FORM 1503 03.82 (P04C01)

## ANNEX TO THE EUROPEAN SEARCH REPORT
## ON EUROPEAN PATENT APPLICATION NO.

EP 24 30 7060

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2025

| Patent document cited in search report | Publication date | Patent family member(s) | Publication date |
|---|---|---|---|
| WO 2024160604 A1 | 08-08-2024 | NONE | |

**EP 4 761 231 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 23305120